Europäisches Patentamt

European Patent Office

Office européen des brevets

(11) Publication number: 0 272 851
A2

# EUROPEAN PATENT APPLICATION

(21) Application number: 87310877.3

(22) Date of filing: 10.12.87

(51) Int. Cl.4: B60G 21/04 , F16F 1/36

(30) Priority: 22.12.86 US 944915

(43) Date of publication of application:
29.06.88 Bulletin 88/26

(84) Designated Contracting States:
AT CH DE ES FR GB LI SE

(71) Applicant: FARATHANE, INC.
23514 Groesbeck Highway
Warren Michigan 48089(US)

(72) Inventor: Wisner, Terrance
17927 Summer Lane N.
Fraser Michigan, 48026(US)
Inventor: Hill, Clinton
411 W. Twelve Mile
Royal Oak Michigan, 48073(US)

(74) Representative: Ranson, Arthur Terence et al
W.P. Thompson & Co. Coopers Building
Church Street
Liverpool L1 3AB(GB)

(54) Improved coupling.

(57) A flexible coupling (12) comprises a resiliently yieldable polyurethane bushing (13,13a) having a cylindrical surface (14) and a plurality of small lobes (18,18a) over that surface and projecting radially into frictionally binding engagement with the confronting cylindrical surface (11,11a) such as a steel rod or bracket. The yieldability of the polyurethane enables limited relative oscillatory movement between the rod or bracket and bushing. The rounded distal ends of the lobes tend to roll in non-sliding frictional contact with the rod or bracket during such movement and essentially eliminate noise from the coupling.

Fig-4

Fig-5

## IMPROVED COUPLING

The present invention concerns improved couplings and more particularly relates to resiliently yieldable couplings or bushings between two relatively pivotal members and specifically to improvements in such couplings or bushings that minimize squeaking noises during operation.

A common arrangement in a resiliently yieldable coupling comprises a bushing member of resiliently yieldable rubber-like material having a cylindrical surface in coaxial mutually supporting engagement with a cylindrical surface of a comparatively non-deformable member of steel or other rigid material. The flexible bushing is tightly compacted against the rigid material to effect a frictional binding engagement between the two members, but is sufficiently flexible to enable limited relative oscillatory movement with a minimum or relative sliding movement.

The materials used heretofore for the bushing have not been particularly resistant to abrasion and deterioration by ageing or wear. Rubber in particular deteriorates with time even when not in use. It is known that polyurethanes have the physical properties such as resiliency, elasticity, toughness, tensile strength, and resistance to abrasion and ageing that render polyurethanes especially desirable for use in many types of flexible couplings. However, the polyurethanes as used heretofore in many types of couplings of the type described above have not been entirely satisfactory because of an objectionable squeak or squeaking noise that occurs during operation of the coupling, or an objectionable noise such as a sharp click or snap when the resiliently yieldable material and the rigid member are initially moved relative to each other after having been in contact but without relative movement with respect to each other for a period of time. These noises usually become even more objectionable when a conventional corrosion resistant coating is applied to the steel cylindrical surface of the coupling.

Many configurations for the surface area of contact between the polyurethane bushing and the metallic or rigid member have been tried unsuccessfully to eliminate the above-noted noises. Irregularities employed heretofore, such as ridges, ribs and corrugations in one of the cylindrical surfaces, particularly the cylindrical surface of the polyurethane bushing, have not obtained satisfactory results. Examples of such configurations are found in US-A-2,772,104 and US-A-2,952,486. These patents illustrate the state of the art and the latter patent discloses a flexible polyurethane bushing containing a lubricant, but without recourse to the configuration of the bushing described hereafter, the lubricant alone in the polyurethane composition is not adequate to eliminate the objectionable squeaking noise.

The U.S. Patents noted above are representative of the state of the art, but no teaching of a polyurethane bushing or coupling as described herein is known to applicants wherein the polyurethane bushing has a plurality of rounded lobes projecting radially from its cylindrical surface into frictionally binding contact with a confronting cylindrical surface of a non-deformable coupling member and arranged to essentially eliminate the aforesaid snap or click or squeaking noise during operation of the coupling.

Important objects of the present invention are to provide an improved flexible coupling of the type described above comprising a resilient yieldable polyurethane bushing member having a cylindrical surface in coaxial mutually supporting engagement with a cylindrical surface of a comparatively non-deformable member of steel or other rigid material, wherein the aforesaid snap or squeak resulting from operation of the bushing is essentially eliminated; and to provide such a coupling wherein the bushing member has a plurality of comparatively small rounded lobes projecting radially from and spaced over its cylindrical surface and having rounded distal ends effecting an interference engagement with the cylindrical surface of the non-deformable member; and to provide such a bushing member wherein its lobes are semi-spherical with diameters on the order of magnitude of approximately one-fifteenth the diameter of the cylindrical surface of the bushing member, and wherein their centres are spaced apart by distances approximating two to several times their diameters.

Other and more specific objects are to provide such a coupling wherein the cylindrical surface of the bushing member comprises its inner surface coaxially enclosing and closely confining the cylindrical surface of a steel rod; and to provide such a coupling wherein an outer surface of the bushing member is tightly confined within a bracket member fixed with respect to the bushing member; and to provide such a coupling wherein the rod may comprise the transverse sway bar of an automobile, wherein the diameter of the cylindrical surface of the bushing member is on the order of magnitude of three centimetres, the diameters of the semi-spherical lobes are on the order of magnitude of two millimetres, and the interference fit between the distal ends of the lobes and the cylindrical surface of the rod is in a range on the order of magnitude of between two hundredths of a millimetre and one millimetre.

Another object is to provide a coupling as described above wherein the polyurethane is formed with a surface migrating lubricant within its composition to effect a long lasting self-lubrication of the junctures between the lobes and rigid member.

Another object is to provide an improved lobed bushing member of the type described herein and adapted for use in couplings as described above.

According to the present invention then, a resiliently yieldable coupling comprising two members having cylindrical surfaces, one of said members being formed from resiliently yieldable material having a plurality of protrusions extending radially from and spaced over the area of its cylindrical surface, the other of said members comprising a rigid material having its cylindrical surface confronting the cylindrical surface of said one member, is characterized by means for reducing noise upon relative movement between said members comprising each protrusion from the cylindrical surface of said one member having a base at the latter cylindrical surface and a rounded distal end remote from the latter cylindrical surface, the cylindrical surface of said other member engaging the distal ends of said protrusions at an interference fit frictionally binding said members together.

Also according to the present invention a resiliently yieldable coupling between a cylindrical surface of a steel rod and a cylindrical surface of a resiliently yieldable polyurethane bushing, is characterised by means for minimizing noise upon relative oscillatory movement between said rod and bushing comprising a plurality of lobes of said bushing projecting radially from its cylindrical surface toward the cylindrical surface of said rod and engaging the latter at an interference fit frictionally binding said rod and bushing together.

The invention will now be further described by way of examples with reference to the accompanying drawings, wherein like reference characters designate corresponding parts in the several views, and in which:-

Figure 1 is a fragmentary and somewhat schematic front end view of an automobile, showing a transverse sway bar utilizing a coupling embodying the present invention;

Figure 2 is an enlarged fragmentary perspective view showing the sway bar and coupling of Figure 1;

Figure 3 is a further enlarged sectional view transversely through the sway bar, showing the coupling in side elevation;

Figure 4 is a longitudinal sectional view taken in the direction of the arrows substantially along the line 4-4 of Figure 3, and

Figure 5 is an exploded view illustrating the parts of the coupling embodying a modification of the present invention.

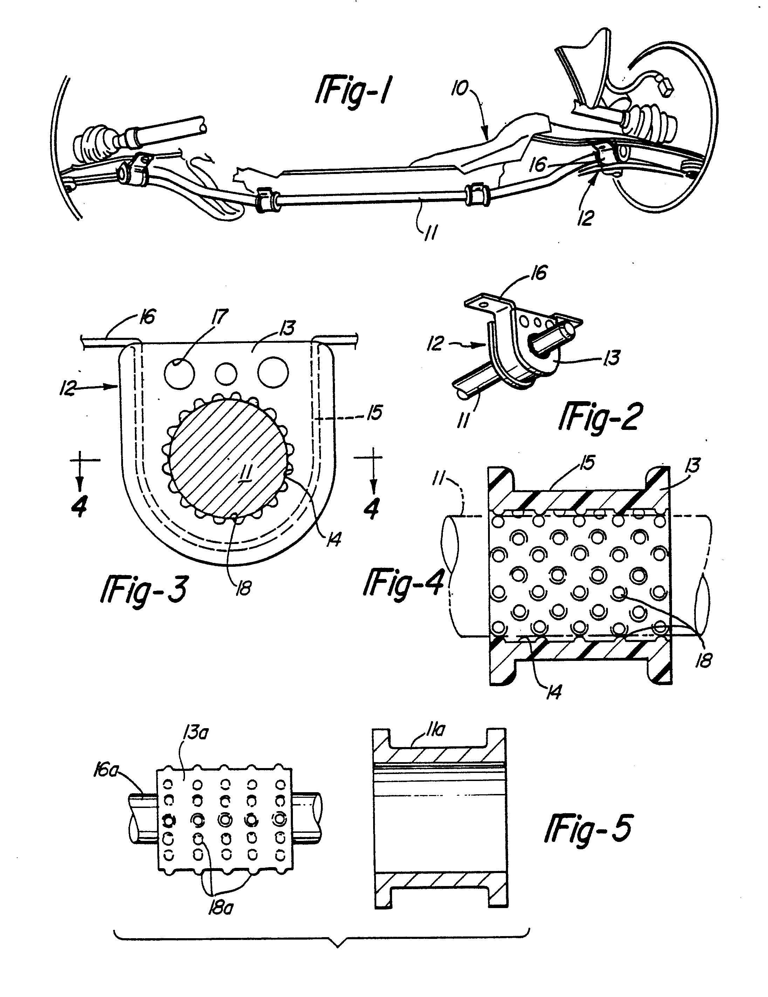

Referring to the drawings, a preferred embodiment of the present invention is illustrated by way of example at the front end of an automobile 10 in an application connecting each of the opposite ends of a sway bar 11 to the vehicle steering control arms by means of a coupling 12. The latter comprises a one-piece moulded bushing 13 of flexible material having a cylindrical opening 14 coaxially enclosing a cylindrical surface of the sway bar 11. The bushing 13 is provided with a grooved exterior portion 15 confined by a strap or bracket 16 that is conventionally bolted to the automobile 10. A plurality of holes 17 extending through the bushing 13 in parallelism with the axis of the opening 14 are provided to increase flexibility of the comparatively hard but resiliently yieldable material of the bushing 13 and to reduce the quantity of material required. The structure describes thus far may be conventional and is accordingly not described in further detail.

A preferred material for the bushing 13 is a comparatively hard, stiff, yet resiliently yieldable polyurethane that can be readily moulded to provide a multitude of small semi-spherical lobes 18 that extend radially inwardly from the cylindrical surface 14 toward the cylindrical surface of the rod 11. The rounded distal ends of the lobes 18 firmly engage the rod 11 at an interference fit frictionally binding the bushing 13 and rod 11 together. In the present instance of the diameter of the rod 11 is approximately three centimetres and the diameter of the semi-spherical lobes is approximately two millimetres. The spacing between the centres of adjacent lobes 18 is approximately two diameters in a spiral or oblique direction, Figure 4, and is approximately three diameters axially and circularly.

The frictional engagement between the distal ends of the lobes 18 is sufficiently firm to minimize relative sliding movement between the rod 11 and bushing 13, but the material of the bushing 13 is sufficiently flexible to enable limited cocking of the rod 11 with respect to the axis of the opening or passage 14, as well as limited relative rotational and axial movement of the rod 11 with respect to the bushing 13 during operation of the vehicle 10.

The distal ends of the lobes 18 contact the cylindrical surface of the rod 11 essentially tangentially, although the interference engagement therebetween will compress the lobes 18 radially by approximately one-half their radius in the usual instance, but the compression could be as much as approximately their radius or as little as approximately two hundredths of a millimetre, depending upon the hardness of the polyurethane material of the bushing 13 and the desired stiffness or cushion effect of the coupling 12. The same factors will of course effect the size or diameter of the lobes 18, the spacing therebetween, and the axial dimension of the confronting cylindrical surfaces of the rod 11 and bushing 13.

During operation of the vehicle, the rod 11 will tend to move relative to the bushing 13, but by virtue of the spherical surfaces of the lobes 18 and their frictional engagement with the rod 11, the semi-spherical lobes 18 will tend to roll at their region of contact with the rod 11 and maintain essentially non-sliding cvontact with the latter. Without being limited to any specific theory of operation, it is believed that the rolling contact between the lobes 18 and cylindrical surface of the rod 11 essentially eliminates both the sound of a click or snap resulting from the energy required to break the set of the resilient bushing material in contact with the rigid member following a period of non-movement, and the squeaking noise that have otherwise been objectionable as a result of an interference fit between the rod 11 and polyurethane bushings known heretofore. In any event the structure described greatly reduces and often eliminates such noises.

Also by reason of the semi-spherical lobes 18 in essentially tangential contact.with the cylindrical surface of the rod 11, the aforesaid limited rolling contact between the lobes 18 will be maintained regardless whether the movement of the rod 11 is axial, rotational, a cocking out of axial alignment, or a combination of such movements. The extent of the interference fit between the lobes 18 and rod 11, i.e. the radial compression of the lobes 18, will be a direct function of the normally expected relative movement between the rod 11 and bushing 13.

It is well known that if a surface migrating lubricant, such as a mineral oil, is added to the polyurethane during its initial formulation, the lubiricant contained within the body of the polyurethane will not bond to the polymer and will gradually migrate to the surface during operation of the coupling to effect self lubrication. Such migration is enhanced by working of the polyurethane and by frictional heat therein, so that the more the bushing 13 and lobes 18 are flexed, the greater will be the self lubrication. Such lubrication enhances the effect of the lobes 18 in minimizing squeaking and is preferred in some coupling arrangements wherein the control of squeaking is otherwise most difficult. However without the benefit of the lobe structure of the bushing 13 as described, the self lubrication by itself is not adequate to prevent the objectionable squeaking.

Figure 5 illustrates an embodiment of the concept of the invention wherein semi-spherical lobes 18a extend radially outwardly from a cylindrical surface of a bushing 13a and frictionally engage the cylindrical interior surface of a steel bracket member 11a. The bushing 13a, like the bushing 13, is moulded from a polyurethane, is of annular section, and is bonded or splined to an exterior cylindrical surface of a steel rod 16a.

In all other respects, the function and operation of the parts are similar to the corresponding parts described above. Specifically the exterior cylindrical surface of the bushing 13a compares in size to the internal cylindrical surface of the bushing 13, and the semi-spherical lobes 18a are comparable in size and function to the lobes 18 and tangentially engage the interior cylindrical surface of the steel support 11a in a frictionally binding engagement as described inregard to the lobes 18 and cylindrical surface of the rod 11. Likewise the tangential contact between the distal ends of the lobes 18a and cylindrical surface of the bracket 11a operate as described above to eliminate or at least greatly reduce the aforesaid click or snap and squeaking noises during operation of the coupling.

Although the present invention has been described in regard to the use of a polyurethane bushing because of its adaptability for use in a wide range of coupling types, the concept of the lobed resilient bushing moulded from other materials having suitable physical specifications for use in various couplings may also be employed to prevent or at least minimize the above-mentioned noises in such couplings. Likewise, although the present invention has been described in application with an automobile sway bar 11 of approximately three centimetres in diameter, and approximately fifteen times the diameter of the lobes 18, it will be useful in other applications of different diameters. The preferred two millimetre diameter lobes 18 or 18a are suitable for use within reasonable range of bushing diameters, but for appreciable smaller or larger diameter bushings subject to lighter or heavier loads respectively, the diameters of the lobes, the extent of compression of the lobes by the interference bushing fit, and the spacing between lobes may be expected to vary as a function proportional to the diameter of the cylindrical bushing surface from which the lobes project.

As noted above, the physical characteristics of the prefered polyurethane used for the bushing 13 or 13a will depend upon the operating conditions, such as the temperature range, exposure to water, oils, or chemicals, and the like, as well as upon the desired cushion effect and freedom of relative movement between the rigid members, i.e., between the rod 11 and bracket 16 and between the bracket 11a and rod 16a. Depending upon the application, the hardness of the polyurethane bushing 13, 13a may vary between approximately 28 and 70 Shore D by ASTM Test D 2240. For a typical automobile sway bar, a hardness approximating 36 Shore D is desired, but for other applications, as for example an off the road vehicle, the hardness may be considerably greater but seldom above 45 Shore D. Other characteristics such as tensile and tear strength, and tensile and compression set, will in general be functions of the hardness, but will be predetermined in accordance with the specific requirements for the bushing. Adaptability to temperature conditions and resistance to exposure to water, oils, and chemicals will be determined by the formulation of the polyurethane. The control of such characteristics for particular purposes are well within the abilities of people skilled in the production of polyurethane.

## Claims

1. A resiliently yieldable coupling (12) comprising two members (11,13) having cylindrical surfaces, one of said members (13,13a) being formed from resiliently yieldable material having a plurality of protrusions (18,18a) extending radially from and spaced over the area of its cylindrical surface (14), the other of said members (11,11a) comprising a rigid material having its cylindrical surface confronting the cylindrical surface of said one member, characterized by means for reducing noise upon relative movement between said members comprising each protrusion (18,18a) from the cylindrical surface (14) of said one member having a base at the latter cylindrical surface and a rounded distal end remote from the latter cylindrical surface, the cylindrical surface of said other member engaging the distal ends of said protrusions at an interference fit frictionally binding said members together.

2. A coupling as claimed in claim 1, characterised in that the rounded distal end of each protrusion (18,18a) has a spherical contour.

3. A coupling as claimed in claim 1 or 2, characterised in that each protrusion (18,18a) comprises essentially a semi-spherical lobe.

4. A coupling as claimed in claim 3, characterised in that each semi-spherical lobe (18,18a) has a diameter of the order of magnitude of approximately two millimetres.

5. A coupling as claimed in claim 4, characterised in that the diameter of the cylindrical surface (14) of said one member is of the order of magnitude of three centimetres, the interference fit between the cylindrical surface of said other member and the distal ends of said lobes is in a range of the order of magnitude of between two hundredths of a millimetre and one millimetre.

6. A coupling as claimed in any one of claims 1 to 5, characterised in that the resiliently yieldable material comprises a polyurethane having a durometer in a range on the order of magnitude of between 28 and 45 Shore D.

7. A coupling as claimed in claim 3 or any claim appendant thereto, characterised in that the spacing between the centres of adjacent lobes (18,18a) is in a range of the order of magnitude of between several times the radius of said lobes and several times the diameters thereof.

8. A coupling as claimed in claim 7, characterised in that the ratio of the diameters of said lobes (18,18a) to the diameter of said member (13,13a) is of the order of magnitude of one to fifteen.

9. A coupling as claimed in claim 8, characterised in that the interference between the cylindrical surface of said other member (11,11a) and the distal ends of said lobes (18,18a) is not greater than a distance of the order of magnitude of the radius of said semi-spherical lobes.

10. A resiliently yieldable coupling between a cylindrical surface of a steel rod (11) and a cylindrical surface (14) of a resiliently yieldable polyurethane bushing (13), characterised by means for minimizing noise upon relative oscillatory movement between said rod (11) and bushing (13) comprising a plurality of lobes (18) of said bushing (13) projecting radially from its cylindrical surface toward the cylindrical surface of said rod (11) and engaging the latter at an interference fit frictionally binding said rod (11) and bushing (13) together.

11. A coupling as claimed in claim 10 characterised in that said lobes (18) have semi-spherical distal ends of comparatively small diameter with respect to the diameter of the cylindrical surface (14) of said bushing (13).

12. A coupling as claimed in claim 10 or 11, characterised in that said rod (11) comprises the sway-bar of an automobile (10), and said lobes comprise semi-spherical projections having diameters of the order of magnitude of two millimetres and having their centres spaced apart by distances in a range of the order of magnitude of between two and several times their diameter.

13. A bushing as claimed in claim 10, 11 or 12, characterised in that the polyurethane of said bushing has a hardness of the order of magnitude of about 36 Shore D.

14. A coupling as claimed in claim 10, characterised in that said lobes comprise semi-spherical projections (18) having diameters of the order of magnitude of two millimetres and having their centres spaced apart by distances of the order of magnitude of between two and several times their diameters, the ratio of the diameters of said lobes with respect to the diameter of said cylindrical surface (14) of said bushing (13) being of the order of magnitude of one to fifteen.

15. A resiliently yieldable coupling as claimed in claim 1 or 10, characterised in that the diameters of said protrusions or lobes and the spacing between their centres is comparatively small with respect to the diameter of said cylindrical surface.

16. A coupling as claimed in claim 15, characterised in that the diameters of said protrusions or lobes are of the order of magnitude of one-fifteenth of the diameter of said cylindrical surface.

17. A coupling as claimed in claim 15 to 16, characterised in that the spacing between the centres of adjacent lobes is of the order of magnitude of between two and several times their diameters.

18. A coupling as claimed in claim 17, characterised in that the diameters of said protrusions or lobes is of the order of magnitude of one-fifteenth of the diameter of said cylindrical surface.

19. A coupling as claimed in any one of claims 1 to 18, characterised in that said resiliently yieldable material comprises a polyurethane, the hardness of which is of the order of magnitude of between 28 and 45 Shore D.

*IFig-1*

*10*

*16*

*12*

*11*

*16*

*IFig-2*

*12*

*13*

*11*

*13*

*16*

*17*

*13*

*12*

*15*

*11*

*4*

*4*

*14*

*18*

*IFig-3*

*11*

*15*

*13*

*IFig-4*

*18*

*14*

*13a*

*11a*

*16a*

*IFig-5*

*18a*